# EUROPÄISCHE PATENTSCHRIFT

(11) **EP 0 974 744 B1**
(45) Veröffentlichungstag und Bekanntmachung des Hinweises auf die Patenterteilung: **22.10.2003**
(21) Anmeldenummer: 99112208.6
(22) Anmeldetag: 25.06.1999
(51) Int. Cl.: F02D 13/04

(54) **Verfahren zur Einstellung der Motorbremsleistung einer aufgeladenen Brennkraftmaschine**
Method for adjusting the engine braking power of a turbocharged engine
Méthode pour ajuster la force de freinage moteur d'un moteur à combustion interne suralimenté

(30) Priorität: 23.07.1998 DE 19833147
(43) Veröffentlichungstag der Anmeldung: 26.01.2000
(73) Patentinhaber: DaimlerChrysler AG, 70567 Stuttgart (DE)
(72) Erfinder: Schmidt, Erwin, 73666 Baltmannsweiler (DE); Sumser, Siegfried, 70184 Stuttgart (DE)

(56) Entgegenhaltungen:
- WO-A-96/39575
- DE-A- 19 637 999
- US-A- 4 913 270

## Beschreibung

Die Erfindung betrifft ein Verfahren zur Einstellung der Motorbremsleistung einer aufgeladenen Brennkraftmaschine nach dem Oberbegriff des Anspruches 1.

Aus der Druckschrift DE 196 37 999 A1 ist eine Brennkraftmaschine bekannt, deren Abgasturbolader auch für eine Motorbremsung herangezogen werden kann. Die Turbine des Abgasturboladers weist eine variabel einstellbare Turbinengeometrie auf, die im Motorbremsbetrieb in eine den Düsenquerschnitt der Turbine reduzierende Staustellung überführt wird, wodurch ein erhöhter Abgasgegendruck erzielt wird. Das Abgas strömt mit hoher Geschwindigkeit durch Kanäle zwischen Leitschaufeln der Turbinengeometrie und beaufschlagt das Turbinenrad, das den Verdichter antreibt, woraufhin im Ansaugtrakt ein Überdruck aufgebaut wird. Dadurch wird der Zylinder eingangsseitig mit erhöhtem Ladedruck beaufschlagt, ausgangsseitig liegt zwischen dem Zylinderauslaß und dem Abgasturbolader ein Überdruck an, der dem Abblasen der im Zylinder verdichteten Luft über Dekompressionsventile in den Abgasstrang hinein entgegenwirkt. Im Motorbremsbetrieb muß der Kolben im Verdichtungs- und Ausschiebehub Kompressionsarbeit gegen den hohen Überdruck im Abgasstrang verrichten, wodurch eine starke Bremswirkung erreicht wird.

Darüberhinaus ist es aus der DE 196 37 999 A1 bekannt, die Motorbremsleistung einer Regelung zu unterziehen, um entweder eine konstante Sollgeschwindigkeit einhalten zu können oder das Fahrzeug in kürzestmöglicher Zeit, beispielsweise in einer Gefahrensituation, auf Null abzubremsen, wobei im letzteren Fall eine maximale Bremsleistung gefordert wird.

Grundsätzlich ist bei sämtlichen Bremsmanövern auch die Fahrstabilität des Fahrzeugs zu beachten. Dies gilt in besonderem Maße für vollbeladene Nutzfahrzeuge und bei kritischen Straßenzuständen, insbesondere bei Schnee und Eis.

Ausgehend von diesem Stand der Technik liegt der Erfindung das Problem zugrunde, ein gattungsgemäßes Verfahren zur Einstellung der Motorbremsleistung einer aufgeladenen Brennkraftmaschine zu schaffen, mit dem hohe Bremsleistungen bei zugleich hoher Fahrstabilität übertragbar sind.

Dieses Problem wird erfindungsgemäß mit den Merkmalen des Anspruches 1 gelöst.

Die Motorbremse wird mit einer Rad-Schlupfregelung kombiniert, wodurch ein unzulässig hoher Schlupfaufbau an den Rädern des Fahrzeugs vermieden wird und eine maximale Momentenübertragung auf die Fahrbahn ermöglicht wird. Das im Motor erzeugte Bremsmoment kann durch den Regeleingriff zwar gegebenenfalls aktuell reduziert werden, das auf die Straße übertragbare Bremsmoment wird aber gesteigert, weil keine Bremsleistungsverluste durch Radschlupf entstehen können, so daß das Fahrzeug insgesamt in kürzerer Zeit abgebremst werden kann.

Der Regeleingriff hat zur Folge, daß permanente Haftreibung zwischen den Rädern und der Straße besteht, so daß die erzeugte Motorbremsleistung vollständig auf die Straße übertragen wird. Dadurch wird einem möglichen Drehzahlabfall vorgebeugt, der im Falle eines Schlupfes entstehen kann, wenn der Motorbremsleistung kein äquivalentes Abtriebsmoment entgegensteht.

Zugleich bleibt die Lenkbarkeit des Fahrzeugs erhalten, da das geregelte, im wesentlichen schlupffreie Rad in der Lage ist, Seitenführungskräfte zu übertragen, die maßgeblich für die Fahrstabilität des Fahrzeugs verantwortlich sind. Damit ist es möglich, hohe Motor-Bremsleistungen, die insbesondere bei Motorbremseinrichtungen unter Einsatz variabler Turbinengeometrien in Nutzfahrzeugen etwa 500 kW erreichen können, ohne Beeinträchtigung der Fahrstabilität zu übertragen.

Die Schlupfregelung wird durchgeführt, indem die Drehzahl zumindest eines Fahrzeugrades bestimmt und mit einem Referenzwert verglichen wird, wobei im Falle einer Abweichung der IstDrehzahl von der Soll-Drehzahl des betreffenden Rades ein Regelsignal generiert wird, das zur Einstellung der variablen Turbinengeometrie der Turbine des Abgasturboladers verwendet wird. Bei dieser Methode wird die variable Turbinengeometrie als aktiv geregelte Motorkomponente eingesetzt. Zusätzliche Bauteile sind zur Einstellung der maximal übertragbaren Motorbremsleistung nicht erforderlich, vielmehr werden nur ohnehin für die Motorbremsung benötigte Komponenten verwendet, wodurch sich auch Kostenvorteile ergeben.

Als Zielvorgabe kann beispielsweise eine konstante, vom Fahrer gewählte Fahrzeuggeschwindigkeit gewählt werden oder auch die Vorgabe, das Fahrzeug schnellstmöglich abzubremsen. In jedem Fall kann die Zielvorgabe schneller und sicherer als beim Stand der Technik erreicht werden, da das im Motor erzeugte Bremsmoment durch die Schlupfregelung zwar unter Umständen begrenzt wird, das auf die Straße übertragbare Bremsmoment jedoch maximiert wird.

In zweckmäßiger Weiterbildung des Verfahrens wird der Referenzwert für die Raddrehzahl aus der Motordrehzahl unter Berücksichtigung der Getriebeübersetzung gebildet. Zur Steigerung der Regelempfindlichkeit können zusätzlich oder alternativ zur Regelung auf Lageebene durch ein- bzw. zweimalige Differentiation auch die Drehzahlen auf Geschwindigkeits- bzw. Beschleunigungsebene berücksichtigt werden.

Der Vergleich der tatsächlichen Raddrehzahl mit der aus der Motordrehzahl ermittelten Soll-Drehzahl hat den Vorteil, daß auch geringste Schlupfneigungen zwischen dem Rad und der Straßenoberfläche erkannt werden können.

Die variable Turbinengeometrie ist bevorzugt bei Verwendung einer Axialschieberturbine als axial verstellbares Leitgitter ausgebildet. Es kommen aber auch andere Turbinen-Bauarten mit variabler Turbinengeometrie in Betracht, insbesondere Drehschaufelturbinen oder Klappenturbinen.

Zusätzlich zur Einstellung der variablen Turbinengeometrie können auch weitere, dem Abgasturbolader bzw. dem Motor zugeordnete Komponenten für die Schlupfregelung herangezogen werden. Als vorteilhaft haben sich die Regelung einer Abblasevorrichtung zur Reduzierung des Abgasgegendrucks sowie die Regelung des Hubes von Bremsventilen am Zylinderausgang erwiesen. Schließlich kann es auch zweckmäßig sein, die Kraftstoffeinspritzung zu regeln, um durch Reduzierung der Antriebsleistung die Bremswirkung zu unterstützen und keine gegensinnigen Momente zu erzeugen.

Die Motorbremse wird vorzugsweise mit der Radbremse kombiniert, wobei vorteilhaft der größtmögliche Bremsleistungsanteil über die Motorbremse geleistet wird, um den Verschleiß der mechanisch wirkenden Radbremse so klein wie möglich zu halten. Die Radbremse wird zweckmäßig für den Fall zugeschaltet, daß die Bremsleistung allein über die Motorbremse nicht mehr aufgebracht werden kann.

Weitere Vorteile und zweckmäßige Ausführungsformen sind den weiteren Ansprüchen, der Figurenbeschreibung und den Zeichnungen zu entnehmen. Es zeigen:
- Fig. 1: eine schematische Darstellung einer aufgeladenen Brennkraftmaschine,
- Fig. 2: ein Schaubild mit der übertragbaren Motorbremsleistung in Abhängigkeit der Drehzahl.

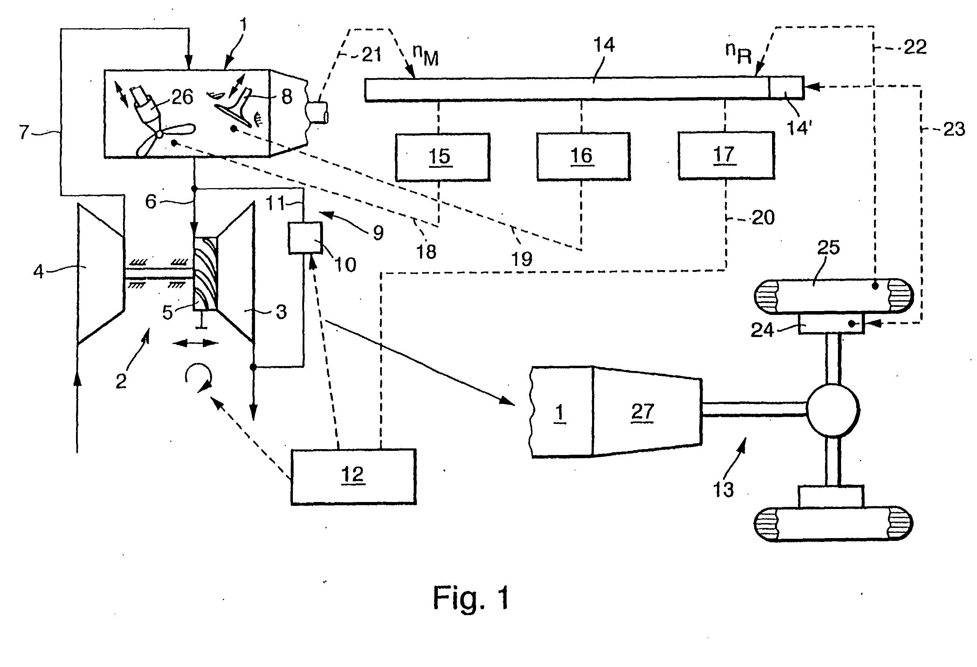

Die in Fig. 1 dargestellte Brennkraftmaschine 1 ist Teil eines Fahrzeugs 13, insbesondere eines Nutzfahrzeugs, und weist einen Abgasturbolader 2 mit einer Varioturbine 3 im Abgasstrang 6 und einem Verdichter 4 im Ansaugtrakt 7 auf. Die Varioturbine 3 ist als Axialschieberturbine mit variabel einstellbarer Turbinengeometrie in Form eines axial verschieblichen Leitgitters 5 ausgestattet. Die Varioturbine 3 wird von den unter Druck stehenden Abgasen im Abgasstrang 6 zwischen dem Zylinderauslaß der Brennkraftmaschine und dem Turbineneinlaß angetrieben und treibt ihrerseits über eine Welle den Verdichter 4 an, der die angesaugte Frischluft auf einen erhöhten Ladedruck verdichtet. Die verdichtete Luft wird dem Zylindereinlaß der Brennkraftmaschine 1 zugeführt und führt zu einer Steigerung der Motorantriebsleistung.

Der Abgasturbolader 2 kann auch im Motorbremsbetrieb zur Erzeugung von Motorbremsleistung genutzt werden. Das axial verschiebliche Leitgitter 5 der Varioturbine 3 wird hierfür in eine Staustellung überführt, in der der wirksame Turbineneintrittsquerschnitt reduziert ist. Daraufhin baut sich ein erhöhter Abgasgegendruck auf, das Abgas strömt mit erhöhter Geschwindigkeit durch Kanäle zwischen den Leitschaufeln des Leitgitters 5 und trifft auf das den Verdichter 4 antreibende Turbinenrad, so daß auch im Ansaugtrakt ein Überdruck entsteht. Zugleich werden Bremsventile 8 am Zylinderauslaß der Brennkraftmaschine 1 geöffnet, so daß die im Zylinder verdichtete Luft in den Abgasstrang 6 abgeblasen werden kann.

Die Bremsleistung kann durch die Position des Leitgitters 5 und der daraus resultierenden Einstellung des Turbineneintrittsquerschnitts beeinflußt werden.

Außerdem ist eine Abblasevorrichtung 9 mit einem Abblaseventil 10 in einer Umgehungsleitung 11 zur Überbrückung der Turbine 3 vorgesehen. Bei geöffnetem Abblaseventil 10 wird zumindest ein Teil des Abgases stromauf der Turbine 3 über die Umgehungsleitung 11 in den Leitungsabschnitt des Abgasstrangs stromab der Turbine geleitet. Das Leitgitter 5 und das Abblaseventil 10 können unabhängig voneinander über ein Stellglied 12 eingestellt werden.

Die Brennkraftmaschine 1, der Abgasturbolader 2 sowie diverse, die Fahrdynamik beeinflussende Komponenten des Fahrzeugs 13 werden über einen Regler 14 geregelt. Der Regler 14 beinhaltet verschiedene Verarbeitungseinheiten 14', 15, 16, 17 und kommuniziert über Signalleitungen 18 bis 23 mit den jeweiligen zu regelnden Komponenten.

Über die Signalleitung 21 erhält der Regler 14 von der Brennkraftmaschine 1 die Information über die aktuelle, gemessene Motordrehzahl n_{M}, über die Signalleitung 22 vom Fahrzeug 13 die aktuelle, gemessene Raddrehzahl n_{R}.

Die Verarbeitungseinheit 14' kommuniziert über die Signalleitung 23 mit einer Radbremseinrichtung 24 an dem Rad 25 des Fahrzeugs 13, über die das Rad 25 mechanisch abgebremst wird. In der Verarbeitungseinheit 14' werden Stellsignale für die Radbremseinrichtung 24 erzeugt, um ein Blockieren des Rades 25 zu verhindern.

Die weiteren Verarbeitungseinheiten 15, 16 und 17, denen die Signalleitungen 18, 19 und 20 zugeordnet sind, dienen der Einstellung einer Kraftstoffeinspritzdüse 26 in der Brennkraftmaschine 1, der Einstellung des Bremsventils 8 sowie der Einstellung des Stellglieds 12 für das Leitgitter 5 bzw. das Abblaseventil 10.

Im Regler 14 werden Stellsignale sowohl für den befeuerten Betrieb als auch für den Bremsbetrieb erzeugt. Im Bremsbetrieb wird zusätzlich zur mechanischen, unmittelbar am Rad 25 angreifenden Radbremseinrichtung 24 auch die Motorbremse eingesetzt, wobei über den Regler 14 die Bremsleistungsverteilung zwischen Radbremse und Motorbremse einstellbar ist. Zweckmäßig wird im Bremsbetrieb in erster Linie die Motorbremse eingesetzt; die Radbremse wird zugeschaltet, falls die geforderte Bremsleistung über die Motorbremse alleine nicht aufgebracht werden kann.

Der Regler 14 verhindert im Motorbremsbetrieb die Entstehung von Schlupf zwischen den Rädern und der Straße, wodurch ein Maximum an Motorbremsleistung auf die Straße übertragbar ist und die Fahrstabilität erhöht ist. Der Regler 14 sorgt durch Einstellung des Leitgitters 5, des Abblaseventils 10, der Menge eingespritzten Kraftstoffs und/oder des Hubes des Bremsventils 8 für einen Abgleich zwischen der Raddrehzahl n_{R} und einem Referenzwert, der sich aus der Motordrehzahl n_{M} unter Berücksichtigung der Getriebeübersetzung des Getriebes 27 bestimmt, wodurch Schlupf verhindert wird.

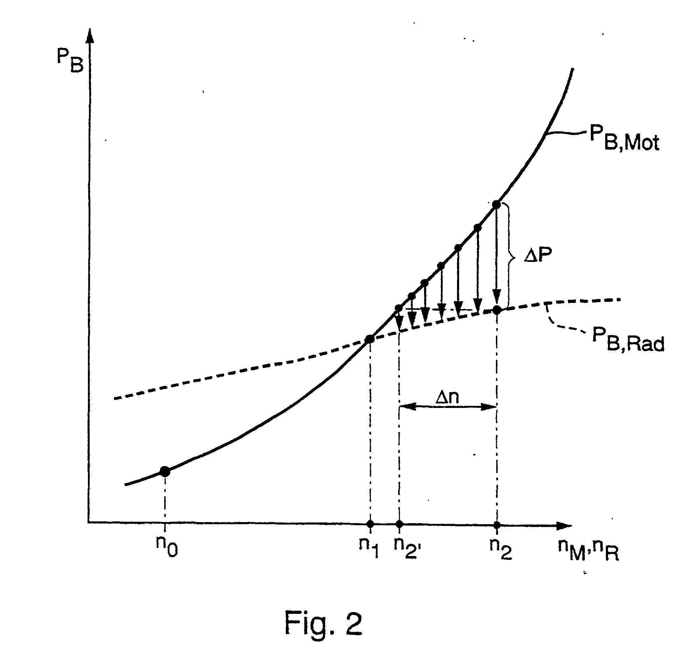

Die mögliche Entstehung von Schlupf im Motorbremsbetrieb ist exemplarisch anhand des Schaubildes nach Fig. 2 gezeigt, in dem der Verlauf der Motorbremsleistung P_{B,Mot} (durchgezogene Linie) in Abhängigkeit der Motordrehzahl n_{M} und der Verlauf der maximal über die Reifenkräfte auf die Straße übertragbaren Radleistung P_{B,Rad} (gestrichelte Linie) in Abhängigkeit der Raddrehzahl n_{R} eingetragen ist. Hierbei ist zu berücksichtigen, daß die Motorbremsleistung P_{B,Mot} konstruktiv bedingt bauartbezogen festgelegt ist, die Radleistung P_{B,Rad} dagegen als Funktion des Straßenzustandes, der Beladung, des Radzustandes, der Witterungsbedingungen etc. von einer Vielzahl von Faktoren abhängt, die sich permanent ändern können; insofern stellt die dargestellte Radleistung P_{B,Rad} einen aktuellen, willkürlich herausgegriffenen Verlauf dar.

Die beiden Kurven für die Motorbremsleistung P_{B,Mot} und die Radleistung P_{B,Rad} schneiden sich im Bereich der Drehzahl n₁. Unterhalb der Drehzahl n₁, im Bereich zwischen n₀ und n₁, liegt die Motorbremsleistung P_{B,Mot} unterhalb der maximal übertragbaren Radleistung P_{B,Rad}, so daß in diesem Bereich die Haftreibung zwischen Räder und Straße für die Bremsleistungsübertragung ausreicht und die Entstehung von Schlupf nicht zu befürchten ist.

Bei Drehzahlen oberhalb der Schnittpunktdrehzahl n₁ liegt der Verlauf der Motorbremsleistung P_{B,Mot} oberhalb der Verlaufes der maximal übertragbaren Radleistung P_{B,Rad}; in diesem Bereich entsteht Schlupf. Aufgrund hoher Haftreibung kann sich die Schnittpunktdrehzahl n₁ weit nach rechts in hohe Drehzahlbereiche verschieben. Verschlechtern sich anschließend infolge ungünstiger Umstände - beispielsweise schlechte Straßenbedingungen - die Haftreibungsbedingungen, verschiebt sich die Schnittpunktdrehzahl n₁ wieder nach links. Wird in diesem Augenblick eine hohe Motorbremsleistung wie im Drehzahlpunkt n₂ dargestellt in der Brennkraftmaschine erzeugt und liegt die übertragbare Radleistung deutlich unterhalb der Motorbremsleistung, so entsteht ein Leistungsüberhang ΔP = P_{B,Mot} - P_{B,Rad}, der zu einer Motordrehzahlabnahme Δn auf den Wert n₂' führt. Die Motordrehzahlabnahme Δn = n₂ - n₂' repräsentiert den Schlupf zwischen Rad und Straße.

Der in Fig. 1 dargestellte Regler 14 ist in der Lage, diesen Schlupf zu vermeiden, so daß die Motorbremsleistung P_{B,Mot} generell auf die maximal übertragbare Radleistung P_{B,Rad} beschränkt bleibt. Dadurch erhält man eine optimale Fahrstabilität, insbesondere eine gute Lenkbarkeit des Fahrzeugs.

Stellt der Regler fest, daß die Raddrehzahl n_{R} größer ist als ein entsprechender aus der Motordrehzahl n_{M} gebildeter Referenzwert, so wird ein Regelsignal erzeugt, das dem Stellglied der variablen Turbinengeometrie zugeführt wird, um den wirksamen Turbinenquerschnitt zu vergrößern. Die Erweiterung des Turbinenquerschnitts bewirkt eine Abnahme des Abgasgegendrucks und eine damit einhergehende Verringerung der Strömungsgeschwindigkeit des Abgases durch die Kanäle zwischen den Leitschaufeln des Leitgitters, wodurch auch der Ladedruck im Zylindereinlaß reduziert wird. Das Druckniveau ist insgesamt herabgesetzt und die Motorbremsleistung wird soweit reduziert, bis der aktuell erzeugte Wert der Motorbremsleistung wieder unterhalb des entsprechenden Wertes der Radleistung liegt und die Entstehung von Schlupf ausgeschlossen ist.

## Patentansprüche

1. Verfahren zur Einstellung der Motorbremsleistung einer aufgeladenen Brennkraftmaschine, wobei der Abgasturbolader (2) der Brennkraftmaschine (1) mit einer variabel einstellbaren Turbinengeometrie zur Veränderung des wirksamen Turbinenquerschnitts versehen ist,
**dadurch gekennzeichnet,**
- **daß** im Motorbremsbetrieb eine Rad-Schlupfregelung durchgeführt wird, indem die Drehzahl (n_{R}) zumindest eines Rades (25) gemessen wird und mit einem Referenzwert (n_{M}) verglichen wird,
- **daß** bei einer Abweichung der gemessenen Raddrehzahl (n_{R}) vom Referenzwert (n_{M}) ein Regelsignal erzeugt wird, das einem die variable Turbinengeometrie beaufschlagenden Stellglied (12) zur Reduzierung des Radschlupfes zugeführt wird, wobei ein den wirksamen Turbinenquerschnitt der variablen Turbinengeometrie erweiterndes Regelsignal erzeugt wird, falls die Raddrehzahl (n_{R}) größer ist als ein entsprechender, aus der Motordrehzahl (n_{M}) gebildeter Referenzwert.

2. Verfahren nach Anspruch 1,
**dadurch gekennzeichnet,**
**daß** der Referenzwert (n_{M}) für die Raddrehzahl (n_{R}) ein der Motordrehzahl (n_{M}) entsprechender Wert ist.

3. Verfahren nach Anspruch 1 oder 2,
**dadurch gekennzeichnet,**
**daß** die variable Turbinengeometrie ein verstellbares Leitgitter (5) umfaßt.

4. Verfahren nach einem der Ansprüche 1 bis 3,
**dadurch gekennzeichnet,**
**daß** eine der Turbine (3) zugeordnete Abblaseeinrichtung (9) vorgesehen ist, die zur Reduzierung des Abgasgegendrucks und der Motorbremsleistung stromauf der Turbine (3) über das Regelsignal zu öffnen ist.

5. Verfahren nach einem der Ansprüche 1 bis 4,
**dadurch gekennzeichnet,**
**daß** am Zylinderausgang Bremsventile (8) angeordnet sind, die über das Regelsignal in Schließstellung versetzbar sind.

6. Verfahren nach einem der Ansprüche 1 bis 5,
**dadurch gekennzeichnet,**
**daß** die Kraftstoffeinspritzung in die Brennräume über das Regelsignal reduziert wird.

7. Verfahren nach einem der Ansprüche 1 bis 6,
**dadurch gekennzeichnet,**
**daß** die maximale Motorbremsleistung (P_{B,Mot}) in Abhängigkeit der Motordrehzahl (n_{M}) in einem Kennfeld abgelegt ist, auf das ein Regler (14) zur Schlupfregelung Zugriff hat.

8. Verfahren nach einem der Ansprüche 1 bis 7,
**dadurch gekennzeichnet,**
**daß** im Bremsbetrieb die Motorbremse und eine Radbremse zeitgleich betrieben werden.

9. Verfahren nach Anspruch 8,
**dadurch gekennzeichnet,**
**daß** die Bremsleistung soweit wie möglich über die Motorbremse aufgebracht wird.

## Claims

1. Method of adjusting the engine braking power of a super-charged internal combustion engine, whereby the exhaust gas turbo-charger (2) of the internal combustion engine (1) is provided with a variably adjustable turbine geometry in order to change the active turbine cross section,
**characterised in that**
- during engine braking operation, a wheel slip control is applied, whereby the speed (n_{W}) of at least one wheel (25) is measured and compared with a reference value (n_{E}),
- if the measured wheel speed (n_{W}) deviates from the reference value (n_{E}), a control signal is generated and forwarded to an adjusting element (13) pressurising the variable turbine geometry in order to reduce wheel slip, so that a control signal is generated to increase the active turbine cross section of the variable geometry if the wheel speed (n_{W}) is higher than a corresponding reference value derived from the engine speed (n_{E}).

2. Method as claimed in claim 1,
**characterised in that**
the reference value (n_{E}) for the wheel speed (n_{W}) is a value corresponding to the engine speed (n_{E}).

3. Method as claimed in claim 1 or 2,
**characterised in that**
the variable turbine geometry is an adjustable guide baffle (5).

4. Method as claimed in one of claims 1 to 3,
**characterised in that**
a blow-off device (9) co-operating with the turbine (3) is provided, which is opened by means of the control signal in order to reduce the exhaust gas back-pressure and the engine braking power upstream of the turbine (3).

5. Method as claimed in one of claims 1 to 4,
**characterised in that**
blow-off valves (8) are provided at the cylinder outlet, which can be switched to the closed position by means of the control signal.

6. Method as claimed in one of claims 1 to 5,
**characterised in that**
the injection of fuel into the combustion chambers is reduced by means of the control signal.

7. Method as claimed in one of claims 1 to 6,
**characterised in that**
the maximum engine braking power (P"& $%) as a function of engine speed (n ) is stored in a characteristic diagram, to which a controller (14) has access for slip control purposes.

8. Method as claimed in one of claims 1 to 7,
**characterised in that**
the engine brake and a wheel brake are operated simultaneously during braking operation.

9. Method as claimed in claim 8,
**characterised in that**
the braking power is applied as far as possible via the engine brake.

## Revendications

1. Procédé pour régler la puissance du frein moteur d'un moteur à combustion interne suralimenté, dans lequel le turbocompresseur à gaz d'échappement (2) du moteur à combustion interne (1) est pourvu d'une turbine à géométrie réglable variable pour modifier la section transversale efficace de la turbine,
**caractérisé en ce que**
- en fonctionnement de frein moteur, on effectue une régulation de glissement de roue en mesurant la vitesse de rotation (n_{R}) d'au moins une roue (25) et on la comparant avec une valeur de référence (n_{M}),
- lors d'un écart de la vitesse de rotation mesurée (n_{R}) de la roue par rapport à la valeur de référence (n_{M}), on génère un signal de régulation que l'on achemine vers un organe de positionnement (12), sollicitant la turbine à géométrie variable, pour réduire le glissement de la roue, en générant un signal de régulation élargissant la section transversale efficace de la turbine à géométrie variable, au cas où la vitesse de rotation (n_{R}) de la roue serait supérieure à une valeur de référence correspondante formée à partir de la vitesse de rotation (n_{M}) du moteur.

2. Procédé selon la revendication 1, **caractérisé en ce que** la valeur de référence (n_{M}) pour la vitesse de rotation (n_{R}) de la roue est une valeur correspondante à la vitesse de rotation (n_{M}) du moteur.

3. Procédé selon l'une ou l'autre des revendications 1 et 2, **caractérisé en ce que** la turbine à géométrie variable comprend une grille directrice déplaçable (5).

4. Procédé selon l'une des revendications 1 à 3, **caractérisé en ce que** l'on prévoit un dispositif d'échappement (9) associé à la turbine (3), lequel sera ouvert via le signal de régulation en amont de la turbine (3) pour réduire la contre-pression des gaz d'échappement et la puissance du frein moteur.

5. Procédé selon l'une des revendications 1 à 4, **caractérisé en ce que** des valves de freinage (8) sont agencées à la sortie du cylindre, qui sont susceptibles d'être mises en position de fermeture via le signal de régulation.

6. Procédé selon l'une des revendications 1 à 5, **caractérisé en ce que** l'injection de carburant dans les chambres de combustion est réduite via le signal de régulation.

7. Procédé selon l'une des revendications 1 à 6, **caractérisé en ce que** la puissance maximale du frein moteur (P_{B, Mot}) en fonction de la vitesse de rotation (D_{M}) du moteur est mémorisée dans un champ caractéristique auquel a accès un régulateur (14) pour réguler le glissement.

8. Procédé selon l'une des revendications 1 à 7, **caractérisé en ce qu'**en fonctionnement de freinage, on fait fonctionner le frein moteur et un frein de roue simultanément dans le temps.

9. Procédé selon la revendication 8, **caractérisé en ce que** la puissance de freinage est fournie le plus possible via le frein moteur.
